# EUROPÄISCHE PATENTSCHRIFT

(11) **EP 1 291 579 B1**
(45) Veröffentlichungstag und Bekanntmachung des Hinweises auf die Patenterteilung: **16.07.2008**
(21) Anmeldenummer: 02017966.9
(22) Anmeldetag: 10.08.2002
(51) Int. Cl.: F23D 11/10, F23D 11/38

(54) **Düse zum Zerstäuben von flüssigem Brennstoff**
Nozzle for pulverizing liquid fuel
Buse pour la pulvérisation d'un carburant liquide

(30) Priorität: 10.09.2001 DE 10144407
(43) Veröffentlichungstag der Anmeldung: 12.03.2003
(73) Patentinhaber: Webasto Thermosysteme International GmbH, 82131 Stockdorf (DE)
(72) Erfinder: Neumüller, Markus, 82229 Hechendorf (DE); Bäcker, Christian, 82256 Fürstenfeldbruck (DE); Sallinger, Christine, 85716 Unterschleissheim (DE); Wolf, Felix, 86157 Augsburg (DE); Kunz, Stefan, 80796 München (DE); Metz, Florian, 86415 Mering (DE)
(74) Vertreter: Schumacher & Willsau

(56) Entgegenhaltungen:
- EP-A- 0 233 330
- DE-A- 4 327 497
- US-A- 4 850 195
- US-A- 5 337 961

## Beschreibung

Die Erfindung betrifft eine Düse zum Zerstäuben von flüssigem Brennstoff mittels durch die Düse strömender Luft mit einem Lufteintrittsbereich, einem Luftaustrittsbereich und einem den Lufteintrittsbereich mit dem Luftaustrittsbereich verbindenden Strömungsweg.

Gattungsgemäße Düsen kommen beispielsweise in Fahrzeugheizgeräten zum Einsatz. Derartige Fahrzeugheizgeräte können zum Beispiel als Zusatzheizgeräte und/oder als Standheizungen betrieben werden.

Die Düse wird zum Zuführen von Verbrennungsluft verwendet, wobei aufgrund der Strömung der Verbrennungsluft flüssiger Brennstoff, beispielsweise Diesel oder Benzin, aus einer Brennstoffnadel mitgeführt und zerstäubt wird. Man erhält auf diese Weise ein Gemisch aus Verbrennungsluft und Brennstoff, welches, gegebenenfalls nach Mischung mit auf anderen Strömungswegen zugeführter Luft, verbrannt werden kann, wodurch die für den Heizbetrieb erforderliche Wärme erzeugt wird. Diese durch einen Brenner erzeugte Wärme erwärmt dann ein Wärmeträgermedium, beispielsweise Wasser oder Luft. Eine derartige Düse ist aus DE 4 327 497 A1 bekannt.

Düsen des Standes der Technik bestehen vielfach aus Metall, wobei Gussteile oder auch Drehteile zum Einsatz kommen. Nachteilig an derartigen Komponenten ist der vergleichsweise hohe Fertigungsaufwand und die im Allgemeinen hohe Wärmeleitfähigkeit der Metalle. Die Wärmeleitfähigkeit kann Probleme bereiten, wenn die im Bereich der Brennstoffnadel vorliegende Temperatur aufgrund der im Brenner erzeugten Wärme über die Maßen ansteigt. Zur Lösung der Probleme, die mit den metallischen Düsen in Verbindung stehen, wurde in einer früheren Patentanmeldung bereits vorgeschlagen, eine keramische Düse zu verwenden.

Für die Vermischung der Verbrennungsluft mit dem Brennstoff auf dem gemeinsamen Weg dieser Stoffe durch die Düse ist das Strömungsverhalten der Verbrennungsluft wichtig. Um das Strömungsverhalten der Verbrennungsluft zu verbessern, wurde in einer früheren Patentanmeldung bereits vorgeschlagen, der Verbrennungsluft einen Drall zu vermitteln. Auf diese Weise konnte es gelingen, die Zerstäubungsqualität und damit den Wirkungsgrad des Brenners deutlich zu verbessern, da die Verbrennungsluftgeschwindigkeit aufgrund einer ausgeprägten Tangentialbewegungskomponente vergrößert wird. Um die Vermittlung eines solchen Dralls zu erreichen, wurde dem Eingangsbereich der Düse ein Träger mit Drallschaufeln vorgeschaltet. Nachteilig an einem solchen Träger mit vorgeschalteten Drallschaufeln ist allerdings, dass ein zusätzliches Bauteil benötigt wird, aufgrund dessen die für eine ungestörte Funktion der Düse bestehenden Toleranzen mitunter überschritten werden können.

Bei Heizgeräten des Standes der Technik ist es weiterhin problematisch, die engen Toleranzen im Hinblick auf die Positionierung des Glühstiftes bezüglich des einströmenden Brennstoff/Luft-Gemisches einzuhalten.

Der Erfindung liegt die Aufgabe zugrunde, eine Düse zur Verfügung zu stellen, welche kostengünstig herstellbar ist und eine im Vergleich zu Metall geringe Wärmeleitfähigkeit aufweist, wobei Justageprobleme vermieden werden sollen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf der gattungsgemäßen Düse dadurch auf, dass die Düse aus keramischem Material besteht, und dass die Düse Mittel zum Halten eines Glühstifts aufweist. Die Positionierung des Glühstiftes bezüglich der Düse ist ein wichtiger Parameter im Hinblick auf ein gutes Startverhalten des Brenners. Bei Heizgeräten des Standes der Technik wurde der Glühstift im Allgemeinen durch das Brennergehäuse gehalten, so dass sich hierdurch Positionierungsschwankungen bezüglich der Düse ergeben konnten. Durch die Eigenschaft der erfindungsgemäßen Düse, dass die Düse selbst Mittel zum Halten des Glühstifts aufweist, können derartige Toleranzen ausgeschlossen werden. Der Glühstift hat stets dieselbe Position bezüglich der Düse.

Die Erfindung ist in vorteilhafter Weise dadurch weitergebildet, dass im Lufteintrittsbereich Mittel zur Luftführung vorgesehen sind, die der zuströmenden Luft einen Drall vermitteln, und dass die Mittel zur Luftführung einstückig mit der Düse ausgebildet sind. Auf diese Weise wird eine kostengünstig herzustellende Düse zur Verfügung gestellt. Das keramische Material lässt sich in einfacher Weise bearbeiten, wobei zahlreiche Varianten im Hinblick auf die Formgebung möglich sind. Insbesondere können die Mittel zur Luftführung, die der Verbrennungsluft außerhalb des Lufteintrittsbereiches einen Drall zuführen, einstückig mit der Düse ausgebildet werden. Aufgrund der Verwendung einer Keramik besteht der weitere Vorteil, dass der Bereich der Düse um eine in der Düse angeordneten Brennstoffnadel keine zu hohen Temperaturen annimmt, so dass es nicht zu einer Entzündung von eventuell aus der Düse austretenden Brennstoffmengen kommen kann. Durch die einstückige Ausbildung der Mittel zur Luftführung können Toleranzen in einfacher Weise eingehalten werden, da eine falsche Justierung der Mittel zur Luftführung beim Zusammenbau des Brenners nicht mehr möglich ist.

Weiterhin ist die erfindungsgemäße Düse in vorteilhafter Weise dadurch weitergebildet, dass die Düse zumindest teilweise eine im Wesentlichen zylindrische Gestalt hat und dass die Mittel zur Luftführung Kanäle bilden, die bezüglich der radialen Richtungen versetzt sind. Die senkrecht zur Achse der Düse einströmende Luft wird also nicht radial zugeführt sondern mit einem Versatz. Dieser Versatz bestimmt den Drall, der der Verbrennungsluft zugeführt wird, damit das Strömungsverhalten und letztlich auch die Eigenschaften und die Qualität der Verbrennung.

Besonders nützlich ist es, dass die Mittel zur Luftführung im Wesentlichen dreiekkige Grundflächen aufweisen, wobei die Ecken abgerundet sind. Hierdurch lässt sich der Kanalversatz in einfacher Weise realisieren. Die Abrundung der Ecken ist vorteilhaft für ein gleichmäßiges Strömungsverhalten.

Es kann auch nützlich sein, dass die Mittel zur Luftführung als Schaufeln ausgebildet sind. Derartige Schaufeln können ebenfalls die versetzten Kanäle bereitstellen, so dass auch hierdurch die Verbrennungsqualität positiv beeinflusst wird.

In einer weiteren bevorzugten Ausführungsform der vorliegenden Erfindung ist vorgesehen, dass die Mittel zum Halten des Glühstifts als schräg zur Zylinderachse verlaufende Bohrung realisiert sind. Der Glühstift muss dann zur geeigneten Positionierung lediglich in die Bohrung eingeführt werden. Ein Anschlag am Glühstift und/oder innerhalb der Bohrung sorgt dafür, dass der Glühstift bezüglich der Düse in seine optimale Position geführt wird.

Die erfindungsgemäße Düse ist in besonders vorteilhafter Weise dadurch weitergebildet, dass ein zumindest im Wesentlichen zylindrischer Teil der Düse einen im Wesentlichen zylindrischen Ansatz mit vergrößertem Durchmesser aufweist und dass die Mittel zum Halten des Glühstifts als schräg zur Zylinderachse verlaufende, den Ansatz durchdringende Bohrung realisiert sind. Auf diese Weise kann der Glühstift in einem Bereich gehalten werden, so dass er das Strömungsverhalten des einströmenden Brennstoff/Luft-Gemisches möglichst wenig beeinflusst. Durch den zylindrischen Ansatz, der einen größeren Durchmesser als der restliche Düsenkörper aufweist, ist dies in einfacher Weise zu bewerkstelligen.

Ebenfalls ist in besonders vorteilhafter Weise vorgesehen, dass ein zumindest im Wesentlichen zylindrischer Teil der Düse einen im Wesentlichen zylindrischen Ansatz mit vergrößertem Durchmesser aufweist und dass der zylindrische Ansatz Ausnehmungen zur Aufnahme von Montagebolzen aufweist. Diese Montagebolzen können beispielsweise an einem Hitzeschild des Brenners fest angebracht sein. Die relative Positionierung der Düse ist auf diese Weise durch die Ausnehmungen in dem Ansatz und die Position der Montagebolzen festgelegt. Damit ist die Montage besonders einfach und mit nur geringen Toleranzen möglich.

In besonders vorteilhafter Weise kann vorgesehen sein, dass die Düse eine Venturi-Düse ist. Der Venturi-Effekt zum Zerstäuben des aus der Brennstoffnadel austretenden Brennstoffes kann auf diese Weise in vorteilhafter Weise mit dem der Brennluft zugeführten Drall kombiniert werden. Die Effekte unterstützen sich und führen somit zu einer Verbrennung von hoher Qualität.

Der Erfindung liegt die Erkenntnis zugrunde, dass eine kostengünstig herstellbare Düse mit in weiten Grenzen variierbarer Formgebung zur Verfügung gestellt wird, indem ein keramisches Material verwendet wird. Die Formgebung der Düse kann so ausgebaut werden, dass eine Glühstifthalterung in Form einer Bohrung integriert wird, wodurch Justageprobleme vermieden werden.

Die Erfindung wird nun mit Bezug auf die beigleitenden Zeichnungen anhand bevorzugter Ausführungsformen beispielhaft erläutert. Es zeigt:
- Figur 1: eine teilweise geschnittene schematische Darstellung eines Heizgeräts, in dem die vorliegende Erfindung zum Einsatz kommen kann;
- Figur 2: eine teilweise geschnittene Seitenansicht einer Ausführungsform einer erfindungsgemäßen Düse;
- Figur 3: eine Draufsicht auf den Lufteintrittsbereich einer erfindungsgemäßen Düse; und
- Figur 4: eine an einem Brenner montierte erfindungsgemäße Düse.

Bei der nachfolgenden Beschreibung der Zeichnungen kennzeichnen gleiche Bezugszeichen gleiche oder vergleichbare Komponenten.

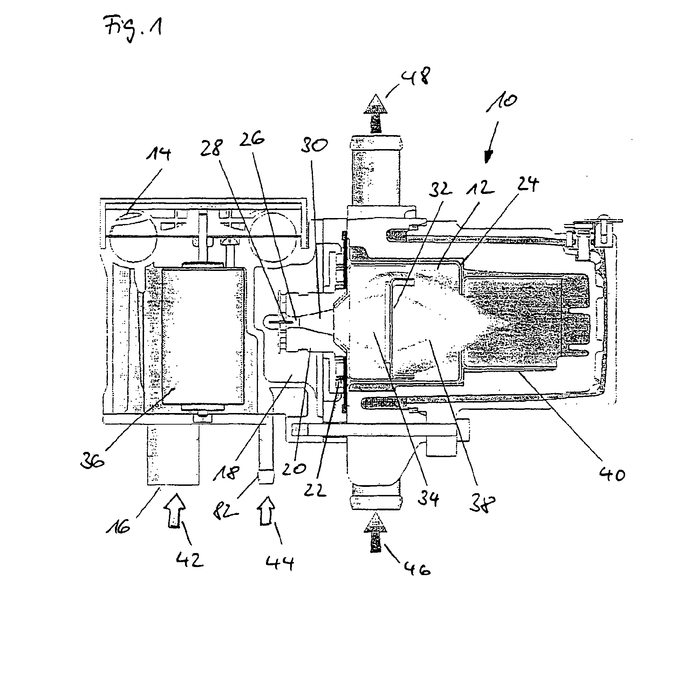

Figur 1 zeigt eine teilweise geschnittene schematische Darstellung eines Heizgeräts, in dem die vorliegende Erfindung zum Einsatz kommen kann. Es ist ein Heizgerät 10 mit einem Brenner 12 zum Verbrennen eines Brennstoffs/Luft-Gemisches dargestellt. Das Heizgerät umfasst ein Ringkanalgebläse 14 mit einem Gebläsemotor 36. Durch das Ringkanalgebläse 14 wird über einen Lufteintrittsstutzen 16 Brennluft 42 angesaugt und druckseitig in einen Brennluftsammelraum 18 eingeblasen. Die in dem Brennluftsammelraum 18 zur Verfügung stehende Brennluft wird in Primärluft und Sekundärluft unterteilt. Die Primärluft wird durch eine Düse 20, die im vorliegenden Beispiel als Venturi-Düse ausgebildet ist, in die Brennkammer 24 gefördert. Die Sekundärluft wird durch Sekundärluftbohrungen 22 in die Brennkammer 24 gefördert. Die Aufteilung der Brennluft in Primärluft und Sekundärluft ist nützlich, um am Austritt der Düse 20 ein fettes, zündwilliges Gemisch bereitzustellen.

Die Düse 20 umfasst eine Beruhigungszone 26 und einen Diffusor 30, um den Venturi-Effekt bereitzustellen. Innerhalb der Düse 20 ist eine Brennstoffnadel 28 angeordnet. Die Brennstoffnadel 28 wird über eine Brennstoffleitung 82 mit Brennstoff 44 versorgt. Aufgrund der hohen Strömungsgeschwindigkeit der Brennluft in der Beruhigungszone 26 wird der aus der Brennstoffnadel 28 annähernd drucklos austretende Brennstoff in Fäden gezogen, die dann in Tröpfchen zerfallen. Die für eine gute Zerstäubung erforderlichen hohen Luftgeschwindigkeiten lassen sich durch einen guten Druckrückgewinn des Diffusors 30 erzielen.

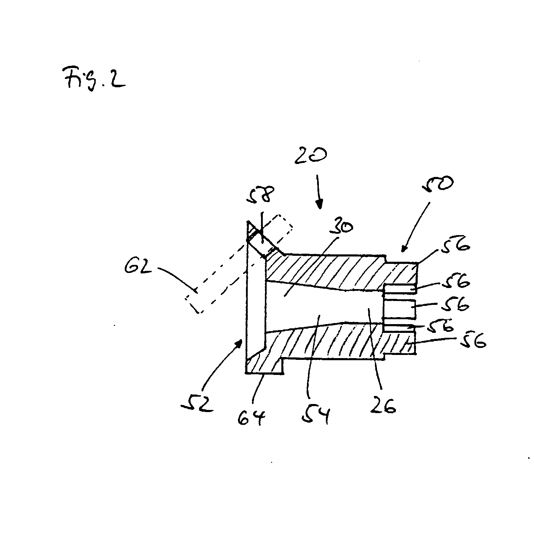

Weiterhin wird im Verlauf des Diffusors 30 die Strömungsgeschwindigkeit des Brennstoff/Luft-Gemisches drastisch reduziert, wodurch im Bereich eines in Fig. 2 angedeuteten Glühstiftes 62 geringe Strömungsgeschwindigkeiten realisiert werden. Dies unterstützt das Ausbilden und Ausbreiten einer Pilotflamme. Nach dem Startvorgang, das heißt der Zündung des Systems durch den Glühstift 62, wird der Glühstift abgeschaltet. Nachfolgend dient er unter Verwendung einer Widerstandsmessung zur Flammüberwachung.

Innerhalb der Brennkammer 24 ist eine Prallscheibe 32 angeordnet. Diese stellt ein Strömungshindernis dar, so dass die aus der Düse 20 austretende Luft nach außen gezwungen wird. Hierdurch findet eine gute Vermischung der Primärluft mit der Sekundärluft statt, was im Hinblick auf einen guten Ausbrand nützlich ist. Der Bereich zwischen Düse 20 und Prallscheibe 32 dient somit als Mischzone 34, und der Bereich jenseits der Prallscheibe 32, das heißt der bezüglich der Prallscheibe 32 stromabwärts liegende Bereich, dient als Reaktionszone 38. Das erzeugte Gemisch verbrennt im weiteren Verlauf des Brennrohres 40 und wird durch die abgasführenden Teile aus dem Heizgerät 10 geleitet. Durch die erzeugte Wärme wird eintretendes kaltes Wasser 46 im Wärmetausch mit den abgasführenden Teilen erwärmt, so dass warmes Wasser 48 aus dem Heizgerät 10 austritt. Als Wärmeträgermedium kann anstelle des Wassers beispielsweise auch Luft verwendet werden.

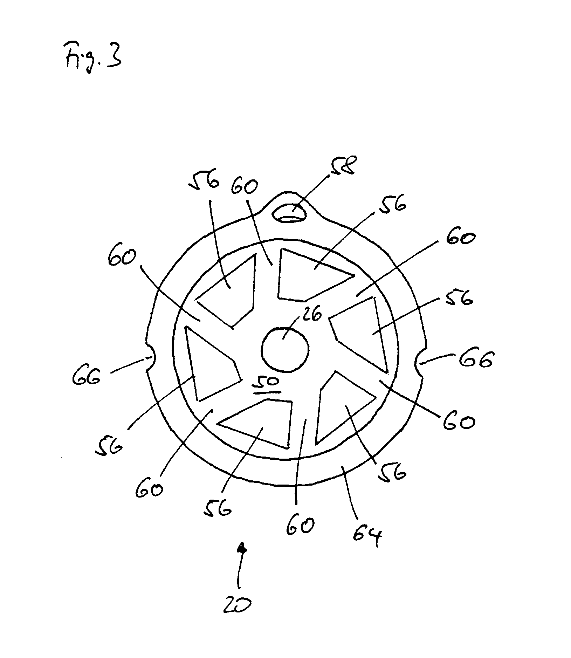

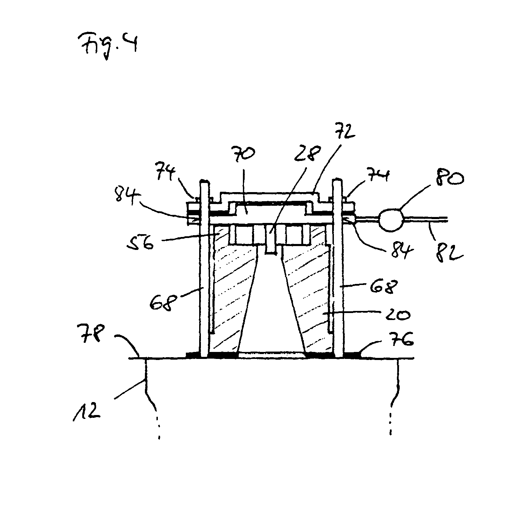

Figur 2 zeigt eine teilweise geschnittene Seitenansicht einer Ausführungsform einer Düse 20. Eine solche Düse 20 ist beispielsweise in einem Heizgerät 10, wie es in Figur 1 dargestellt ist, verwendbar. Die Düse 20 ist aus keramischem Material gefertigt, was die Herstellung der Düse 20 im Vergleich zu Metalldüsen vereinfacht. Die Düse 20 hat einen Lufteintrittsbereich 50 und einen Luftaustrittsbereich 52. Der Lufteintrittsbereich 50 ist mit dem Luftaustrittsbereich 52 über einen Strömungsweg 54 verbunden. Dieser Strömungsweg 54 ist im vorliegenden Beispiel in eine Beruhigungszone 26 und einen Diffusor 30 unterteilt. Im Lufteintrittsbereich sind Mittel 56 zur Luftführung vorgesehen. Diese Luftführungselemente 56 sind einstückig mit der Keramikdüse 20 ausgebildet. Die Luftführungselemente 56 sind so ausgerichtet, dass der zugeführten Luft ein Drall vermittelt wird, was nachfolgend mit Bezug auf Figur 3 näher erläutert wird. Im Beruhigungsbereich 26 kann eine Brennstoffnadel 28 (siehe Fig. 4) angeordnet werden, so dass aus der Düse 20 ein Gemisch von Brennstoff und Luft austritt. Dieses kann dann über einen Glühstift 62, der in eine Bohrung 58 der Düse 20 eingesetzt werden kann, entzündet werden. Die Positionierung des Glühstiftes 62 ist somit bezüglich der Düse 20 festgelegt, da der Glühstift 62 von einer Bohrung 58 der Düse 20 gehalten wird, das heißt insbesondere nicht von beliebigen anderen Bauteilen. Somit können sehr geringe Toleranzen im Hinblick auf die Einbaulage des Glühstiftes 62 eingehalten werden. Die Bohrung 58 durchsetzt in vorteilhafter Weise einen in seinem Radius vergrößerten zylindrischen Ansatz 64 der Düse 20, was den Vorteil hat, dass das Strömungsverhalten der Düse 20 nur wenig von der Bohrung 58 beziehungsweise von dem in der Bohrung 58 angeordneten Glühstift 62 beeinflusst wird.

Figur 3 zeigt eine Draufsicht auf den Lufteintrittsbereich 50 einer Düse. Es ist eine mögliche Gestaltung des Lufteintrittsbereiches 50 durch Luftführungselemente 56 dargestellt. Die Luftführungselemente 56 bilden Kanäle 60 für die einströmende Luft. Diese Kanäle 60 sind bezüglich der Radien des im Wesentlichen auf einer Achse angeordneten Aufbaus so positioniert, dass ein Versatz vorliegt. Von außen einströmende Luft erfährt somit einen Drall, was vorteilhafte Eigenschaften im Hinblick auf die Zerstäubung des Brennstoffes mit sich bringt, der aus der im Beruhigungsbereich 26 anzuordnenden Brennstoffnadel austritt. Weiterhin ist in der vorliegenden Darstellung die Anordnung der Öffnung 58 zur Aufnahme des Glühstiftes zu erkennen. Diese durchdringt einen im Wesentlichen zylinderförmigen Ansatz 64. Der Ansatz 64 ist weiterhin mit Ausnehmungen 66 versehen. Diese Ausnehmungen 66 definieren die Einbaulage der Düse 20, was nachfolgend mit Bezug auf Figur 4 näher erläutert wird.

Figur 4 zeigt eine teilweise geschnittene Ansicht einer erfindungsgemäßen Vorrichtung. Ein der Düse 20 zugewandtes Ende des Brenners 12 ist dargestellt. Der Brenner 12 ist von einem Hitzeschild 78 begrenzt. An diesem Hitzeschild 78 sind bei der vorliegenden beispielhaften Ausführungsform zwei Montagebolzen 68 vorgesehen. Diese Montagebolzen 68 können an dem Hitzeschild 78 beziehungsweise an dem Brenner 12 angeschweißt sein. Die Montagebolzen 68 definieren die Positionierung der nachfolgend beschriebenen weiteren Komponenten. Zunächst ist eine Dichtung 76 vorgesehen, die vorzugsweise aus einer Glimmerschicht und einer Grafitschicht besteht, wobei die Glimmerschicht dem Brenner 12 zugewandt ist und die Grafitschicht der Düse 20 zugewandt ist. Es folgt die Keramikdüse 20, die mit ihren in Figur 3 dargestellten Ausnehmungen 66 unverdrehbar auf den Montagebolzen 68 sitzt. Auf die Düse 20 ist eine Brennstoffzufuhr 70, die mit der Brennstoffnadel 28 in Verbindung steht, aufgesetzt. Diese Brennstoffzufuhr 70 wird mittels in einem seitlichen Flansch vorgesehenen Bohrungen 84 ebenfalls durch die Montagebolzen 68 positioniert. Die Brennstoffzufuhr 70 wird von einer Brennstoffleitung 82, in der ein Brennstoffsensor 80 angeordnet ist, mit Brennstoff versorgt. Auf die Brennstoffzufuhr 70 folgt eine Feder 72, die ebenfalls auf die Montagebolzen 68 aufgesetzt ist. Die Feder 72 wird durch Klemmscheiben 74, die auf den Montagebolzen 68 unverrückbar sitzen, gehalten. Die Feder 72 ist in einem gespannten Zustand dargestellt, in dem die Schenkel der Feder 72 beispielsweise parallel zur dazwischenliegenden Scheibe sind. Im entspannten Zustand der Feder 72 sind die Schenkel der Feder 72 nach oben in Richtung auf die dazwischenliegende Scheibe gebogen. Der in Fig. 4 nicht dargestellte Glühstift wird in Übereinstimmung mit der in Figur 2 dargestellten Ausführungsform einer Düse 20 von dieser positioniert und von einer (nicht dargestellten) Drahtfeder gehalten, die sich an der Düse 20 abstützt.

Die Brennstoffzufuhr 70 und damit die Brennstoffnadel 28 sind auf diese Weise bezüglich der Düse 20 automatisch ausgerichtet. Es sind daher nur noch zwei Bauteile beteiligt, die die Brennstoffzufuhr und die Vermischung des Brennstoffs mit der Brennluft beeinflussen, so dass sehr geringe Toleranzen eingehalten werden können, was durch die axiale Montage auf den gemeinsamen Montagebolzen 68 möglich ist. Ebenfalls kann der Glühstift 62 exakt bezüglich Düse 20 und Brenner 12 positioniert werden. Die Fertigung des in Figur 4 dargestellten Aufbaus ist voll automatisierbar. Insbesondere ist die Montagerichtung einheitlich axial, so dass lediglich ein "Auffädeln" der Bauteile 76, 20, 70, 72 und 74 durchgeführt werden muss. Die Dichtung 76 stellt eine Wärmeisolierung, eine Ankopplung der Düsenkeramik 20 an das Metall des Hitzeschildes 78 und einen Toleranzausgleich zur Verfügung. Der Aufbau kann in vorteilhafter Weise durch kraftgesteuertes Aufpressen der Klemmscheiben 74 auf die Montagebolzen 68 montiert werden, so dass im Hinblick auf die Wärme- und Temperatureigenschaften des Aufbaus einheitliche Voraussetzungen geschaffen werden können. Vermittelt durch die Federkraft der Feder 72 können Toleranzen aufgrund unterschiedlicher Erwärmungen der Komponenten, unterschiedlicher Endtemperaturen der Komponenten und unterschiedlicher Temperaturausdehnungskoeffizienten ausgeglichen werden.

### Bezugszeichenliste

- 10: Heizgerät
- 12: Brenner
- 14: Ringkanalgebläse
- 16: Lufteintrittsstutzen
- 18: Brennluftsammelraum
- 20: Düse
- 22: Sekundärluftbohrung
- 24: Brennkammer
- 26: Beruhigungszone
- 28: Brennstoffnadel
- 30: Diffusor
- 32: Prallscheibe
- 34: Mischzone
- 36: Gebläsemotor
- 38: Reaktionszone
- 40: Brennrohr
- 42: Verbrennungsluft
- 44: Brennstoff
- 46: eintretendes kaltes Wasser
- 48: austretendes warmes Wasser
- 50: Lufteintrittsbereich
- 52: Luftaustrittsbereich
- 54: Strömungsweg
- 56: Luftführungselemente
- 58: Bohrung
- 60: Kanal
- 62: Glühstift
- 64: Ansatz
- 66: Ausnehmung
- 68: Montagebolzen
- 70: Brennstoffzufuhr
- 72: Feder
- 74: Klemmscheibe
- 76: Dichtung
- 78: Hitzeschild
- 80: Brennstoffsensor
- 82: Brennstoffleitung
- 84: Bohrung (in 70)

## Patentansprüche

1. Düse zum Zerstäuben von flüssigem Brennstoff mittels durch die Düse (20) strömender Luft mit
- einem Lufteintrittsbereich (50),
- einem Luftaustrittsbereich (52) und
- einem den Lufteintrittsbereich (50) mit dem Luftaustrittsbereich (52) verbindenden Strömungsweg (54),
**dadurch gekennzeichnet,**
- **dass** die Düse (20) aus keramischem Material besteht und
- **dass** die Düse (20) Mittel (58) zum Halten eines Glühstifts (62) aufweist.

2. Düse nach Anspruch 1, **dadurch gekennzeichnet,**
- **dass** im Lufteintrittsbereich (50) Mittel (56) zur Luftführung vorgesehen sind, die der zuströmenden Luft einen Drall vermitteln, und
- **dass** die Mittel (56) zur Luftführung einstückig mit der Düse (20) ausgebildet sind.

3. Düse nach Anspruch 2, **dadurch gekennzeichnet,**
- **dass** die Düse (20) zumindest teilweise eine im Wesentlichen zylindrische Gestalt hat und
- **dass** die Mittel (56) zur Luftführung Kanäle (60) bilden, die bezüglich der radialen Richtungen versetzt sind.

4. Düse nach Anspruch 2 oder 3, **dadurch gekennzeichnet, dass** die Mittel (56) zur Luftführung im Wesentlichen dreieckige Grundflächen aufweisen, wobei die Ecken abgerundet sind.

5. Düse nach einem der Ansprüche 2 bis 4, **dadurch gekennzeichnet, dass** die Mittel (56) zur Luftführung als Schaufeln ausgebildet sind.

6. Düse nach einem der vorhergehenden Ansprüche, **dadurch gekennzeichnet, dass** die Mittel zum Halten des Glühstifts (62) als schräg zur Zylinderachse verlaufende Bohrung (58) realisiert sind.

7. Düse nach einem der vorhergehenden Ansprüche, **dadurch gekennzeichnet,**
- **dass** ein zumindest im Wesentlichen zylindrischer Teil der Düse (20) einen im Wesentlichen zylindrischen Ansatz (64) mit vergrößertem Durchmesser aufweist und
- **dass** die Mittel zum Halten des Glühstifts (62) als schräg zur Zylinderachse verlaufende, den Ansatz (64) durchdringende Bohrung (58) realisiert sind.

8. Düse nach einem der vorhergehenden Ansprüche, **dadurch gekennzeichnet,**
- **dass** ein zumindest im Wesentlichen zylindrischer Teil der Düse (20) einen im Wesentlichen zylindrischen Ansatz (64) mit vergrößertem Durchmesser aufweist und
- **dass** der zylindrische Ansatz (64) Ausnehmungen (66) zur Aufnahme von Montagebolzen (68) aufweist.

9. Düse nach einem der vorhergehenden Ansprüche, **dadurch gekennzeichnet, dass** die Düse (20) eine Venturi-Düse ist.

## Claims

1. A nozzle for nebulizing liquid fuel by means of air flowing through the nozzle (20), having
- an air entrance area (50),
- an air exit area (52), and
- a flow path (54) connecting the air entrance area (50) to the air exit area (52),
**characterized in that**
- the nozzle (20) consists of ceramic material and
- the nozzle (20) has means (58) for holding a glow pin (62).

2. The nozzle as claimed in claim 1, **characterized in that**
- means (56) for air guidance are provided in the air entrance area (50), for imparting a swirl to the inflowing air, and
- the means (56) for air guidance are formed in a single piece with the nozzle (20).

3. The nozzle as claimed in claim 2, **characterized in that**
- the nozzle (20) has at least partially an essentially cylindrical shape and
- the means (56) for air guidance form ducts (60) which are displaced with regard to the radial directions.

4. The nozzle as claimed in claim 2 or 3, **characterized in that** the means (56) for air guidance have essentially triangular base areas, wherein the angles are rounded.

5. The nozzle as claimed in any of claims 2 to 4, **characterized in that** the means (56) for air guidance are accomplished as blades.

6. The nozzle as claimed in any of the preceding claims, **characterized in that** the means for holding the glow pin (62) are accomplished as a bore (58) running obliquely to the cylinder axis.

7. The nozzle as claimed in any of the preceding claims, **characterized in that**
- an at least essentially cylindrical portion of the nozzle (20) has an essentially cylindrical extension (64) having an enlarged diameter, and
- the means for holding the glow pin (62) are accomplished as a bore (58) running obliquely to the cylinder axis and traversing the extension (64) .

8. The nozzle as claimed in any of the preceding claims, **characterized in that**
- an at least essentially cylindrical portion of the nozzle (20) has an essentially cylindrical extension (64) having an enlarged diameter and
- the cylindrical extension (64) has recesses (66) for receiving mounting pins (68).

9. Nozzle as claimed in any of the preceding claims, **characterized in that** the nozzle (20) is a Venturi nozzle.

## Revendications

1. Buse pour brumiser du combustible liquide au moyen d'air coulant à travers la buse (20), comportant
- une zone d'entrée d'air (50)
- une zone de sortie d'air (52) et
- un chemin d'écoulement (54) liant la zone d'entrée d'air (50) à la zone de sortie d'air (52),
**caractérisée en ce que**
- la buse (20) consiste d'un matériau céramique et
- la buse (20) comporte des moyens (58) pour tenir un boulon d'incandescence (62).

2. Buse selon la revendication 1, **caractérisée en ce que**
- dans la zone d'entrée d'air (50) des moyens (56) de guidage d'air transmettent une torsion à l'air affluant sont prévus et
- les moyens (56) de guidage d'air sont formés en pièce unique avec la buse (20).

3. Buse selon la revendication 2, **caractérisée en ce que**
- la buse (20) a au moins partiellement une forme essentiellement cylindrique et
- les moyens (56) de guidage d'air forment des canaux (60) décalés par rapport aux directions radiales.

4. Buse selon la revendication 2 ou 3, **caractérisée en ce que** les moyens (56) de guidage d'air comportent des surfaces de base essentiellement triangulaires dont les coins sont arrondis.

5. Buse selon l'une des revendications 2 à 4, **caractérisée en ce que** les moyens (56) de guidage d'air sont façonnés en forme d'aubes.

6. Buse selon l'une des revendications précédentes, **caractérisée en ce que** les moyens pour tenir le boulon d'incandescence (62) sont réalisés sous forme d'une percée (58) s'étendant obliquement à l'axe du cylindre.

7. Buse selon l'une des revendications précédentes, **caractérisée en ce que**
- une partie au moins essentiellement cylindrique de la buse (20) comporte un raccord (64) essentiellement cylindrique ayant un diamètre agrandi et
- les moyens pour tenir le boulon d'incandescence (62) sont réalisés (62) sous forme d'une percée (58) s'étendant obliquement à l'axe du cylindre et traversant le raccord (64).

8. Buse selon l'une des revendications précédentes, **caractérisée en ce que**
- une partie au moins essentiellement cylindrique de la buse (20) comporte un raccord (64) essentiellement cylindrique ayant un diamètre agrandi et
- le raccord cylindrique (64) comporte des exclusions (66) pour recevoir des boulons de montage (68) .

9. Buse selon l'une des revendications précédentes, **caractérisée en ce que** la buse (20) est une buse venturi.
